# EUROPEAN PATENT SPECIFICATION

(11) **EP 0 521 065 B1**
(45) Date of publication and mention of the grant of the patent: **18.08.1999**
(21) Application number: 91906687.8
(22) Date of filing: 19.03.1991
(51) Int. Cl.: G01N 27/447, B01D 57/02

(54) **ELECTROPHORETIC MEDIA**
ELEKTROPHORETISCHE MEDIEN
MILIEU ELECTROPHORETIQUE

(30) Priority: 20.03.1990 US 496338; 15.08.1990 US 568237
(43) Date of publication of application: 07.01.1993
(73) Proprietor: FMC CORPORATION, Philadelphia, PA 19103 (US)
(72) Inventor: SHORR, Robert, Overbrook Hills, PA 19151 (US)
(74) Representative: McCall, John Douglas
(86) International application number: US9101856
(87) International publication number: WO9114489

(56) References cited:
- EP-A- 339 678
- EP-A- 0 169 397
- EP-A- 0 280 567
- US-A- 4 189 370
- US-A- 4 806 434

## Description

This invention relates to novel electrophoretic media. The media preferably comprise polymer gels which exhibit greater strength, resolution and recoverability of separated products such as DNA than commercially available gels. The media can also be otherwise formulated, such as in bead form and as a surface coating.

During the last decade, considerable advances have been made in molecular biology revolving around the ability to manipulate peptides, DNA and RNA. These advances have fueled the emergence of the biotechnology industry, with extensive research and development geared to the production of biopharmaceuticals, genetically engineered vaccines, immunochemicals, organisms, plants and novel diagnostics. Electrophoresis, a technique in which complex biological substances such as proteins, peptides, DNA and RNA are separated according to size and/or charge, is a powerful separation method widely used within every life science discipline. The procedure is used for the resolution and isolation of complex biological substances such as proteins, peptides, DNA and RNA, and is thus a technique upon which the emerging biotechnology industry is greatly dependent. The needs of the industry have placed new and increased demands on electrophoretic technology, there being a considerable need for electrophoretic media which can provide improved resolution, handleability, and recovery and a range of matrix pore sizes which can be used in newly discovered applications.

Most analytical electrophoresis methods are based on zone electrophoresis in which a thin zone of a sample is applied to the electrophoretic medium. When the components of the sample are to be separated according to their charge, an electric potential is applied to the electrophoretic medium for a certain period of time, so that charged components of the sample move in various distances depending on their chemical natures. When the components of the sample are to be separated according to their size, the electrophoretic medium contains a denaturing agent so that components of the sample move in various distances depending on their molecular weights. The migration of the sample components results in the formation of fractional zones which can then be examined and studied by application of standard electrophoretic practices such as fixing, staining, and washing to remove buffers. Typically, the electrophoretic medium is a thin gel slab supported by a suitable material, commonly glass or plastic.

Various hydrophilic colloids, such as starch, cellulose acetate and agarose have been used in the forming of electrophoretic gel slabs, but polyacrylamide is generally favored. Polyacrylamide is used as a cast material composed of varying amounts of acrylamide and bis-acrylamide. N,N¹-bis-acrylylcystamine, N,N¹-dihydroxy ethylene bis-acrylamide, and N,N¹-diallyltartardiamide have also been used. These materials are conventionally proportioned to prepare, on polymerization, a network of polymeric fibers for sieving or anti-convection. Viscosity of the gel is adjusted by varying the amounts of acrylamide and bis-acrylamide. Frequently used catalyst and initiator are TEMED (tetraethylaminediamine) and ammonium persulfate or riboflavin/light.

Methods known in the art for utilizing polyacrylamide gels for determination of nucleotide sequences involve the preparation of the gels in given thicknesses, such as between glass plates to a thickness of approximately 0.3 mm. In some applications the gel may be polymerized onto a support film. DNA samples labeled such as with ³²P, ³⁵S or fluorescent dyes are placed onto sample slots and electrophoresed. After electrophoresis (1-24 hours) the gel is removed from the glass plates and autoradiography performed. In automated systems, fluorescent labeled nucleotides are monitored during the separation. Autoradiography requires 10 to 20 hours after which time films are studied to determine nucleotide sequence. The preparation of gels for autoradiography of ³⁵S nucleotides requires immersion in 10% acetic acid to remove urea and handling of the gels with caution due to extreme fragility.

When proteins are being separated by electrophoretic methods based on their size, sodium dodecyl sulfate (SDS) is generally added to the polyacrylamide gel alone, or in conjunction with other denaturants, to unfold the protein and provide a net negative charge. Molecular sizes can be estimated from mobilities as compared to known standards. When separations are being made according to charge, the polyacrylamide gels are generally used in combination with acidic, basic or neutral buffer systems in the absence of denaturing agents. Electrodes are positioned according to the predicted net charge of the sample at the pH used.

Despite the widespread use of polyacrylamide gels to separate complex proteins, double or single stranded DNA, synthetic oligonucleotides and the like as well as for DNA sequencing, a number of disadvantages are associated with polyacrylamide. Among them are neurotoxicity, short shelf life, cumbersome preparation, and gel fragility. Neurotoxicity and instability have only recently been addressed in the development of adequate precast polyacrylamide gels. Gel fragility is considered a major difficulty in DNA sequencing where ultrathin gels are required for optimum resolution on autoradiography of radiolabeled nucleotides. These disadvantages are also found in other applications of electrophoresis such as separation of proteins.

Recognizing the shortcomings of polyacrylamide gels, many have attempted to improve the gels. U.S. Patent 4,657,656 to Ogawa discloses an improved medium for electrophoresis comprising a polyacrylamide gel formed by crosslinking polymerization of an acrylamide compound and a crosslinking agent and further containing a water soluble polymer having a molecular weight in the range of 10,000 to 1,000,000, such as polyvinyl alcohol or polyacrylamide. Incorporation of the water soluble polymer such as solid polyacrylamide is said to reduce the brittleness of the polyacrylamide gel. Crosslinking agents disclosed as being suitable are N,N'-methylenebisacrylamide, N,N'-propylenebisacrylamide, diacrylamide dimethylether, 1,2-diacrylamide ethyleneglycol, ethyleneureabisacrylamide, ethylene diacrylate, N,N'-diallyltartardiamide and N,N'-bisacrylylcystamine.

U.S. Patent 4,695,354 to Sugihara et al. discloses that conventional thin polyacrylamide gels are unsuitable because, when used to resolve nucleic acid fragments, they give distorted patterns. Sugihara et al. disclose that the resolution of the gels can be improved by incorporating into the gels less than 1 wt/v% of glycerol.

The fragility and brittleness of conventional polyacrylamide gel membranes can lead to problems when it is desired to dry the membranes for enhanced resolution. As disclosed in U.S. 4,699,705 to Ogawa et al., in the drying process, the adhesion between the glass plate and the membrane is negligible, the membrane is easily broken. To alleviate these problems, Ogawa et al. disclose that the adhesion between the membrane and its support can be enhanced by utilizing as the support a polymer sheet which has been subjected to glow discharge treatment. The patent also suggests the incorporation in the gel medium of at least one carbamoyl, group-containing compound, such as urea or formamide, as modifier. Other methods disclosed for improving the adhesion between a polyacrylamide gel membrane and its support involve the use of special adhesives as disclosed in U.S. Patents 4,548,869, 4,548,870, 4,579,783 and U.S. 4,600,641 to Ogawa et al. and in U.S. Patent 4,415,428 to Nochumson et al.

U.S. 4,582,868 to Ogawa et al. notes that the polymerization reaction for the preparation of polyacrylamide can be inhibited by the presence of oxygen. It discloses a novel medium for electrophoresis in the form of an aqueous gel which can be prepared in the presence of oxygen. The novel medium is an acrylamide copolymer having a specifically selected repeating unit.

U.S. 4,189,370 to Boschetti discloses gel polymers prepared by radical polymerization of N-methylol-acrylamide and a bifunctional allylic or acrylic compound causing crosslinking to yield a tridimensional configuration polymer. Examples of crosslinking agents disclosed in the patent are N,N'-methylene bisacrylamide, diallyltartramide and ethylenediacrylate.

EP 0 339 678 refers to an electrophoretic medium comprising an aqueous gel formed by polymerization in the presence of aqueous medium and in the absence of oxygen of one or more monomers in the presence of one or more crosslinking agents,
wherein
said one or more monomers are selected from compounds of the formulas 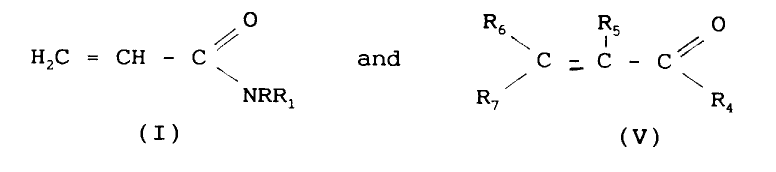 where
- R =: alkyl, optionally mono-substituted with -OH, or with -C(O)CH₂C(O)CH₃;
- R₁ =: H or alkyl, optionally mono-substituted with -OH or with -C(O)CH₂C(O)CH₃;
- R₄ =: -OR₈, -SR₈ or -NR₈R₉;
- R₅ =: H, halogen, or an alkyl, aromatic, cycloalkyl or hetero-cyclic group;
- R₆ and R₇: are independently H or halogen;
- R₈ and R₉: are independently H, a lipophilic unit or a hydrophilic moiety, provided that, when R₄ is -NR₈R₉, R₈ is other than H, alkyl or alkyl optionally mono-substituted with -OH or with -C(O)CH₂C(O)CH₃;
and said one or more crosslinking agents are selected from compounds of the formulas 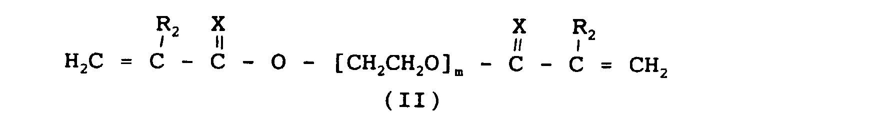 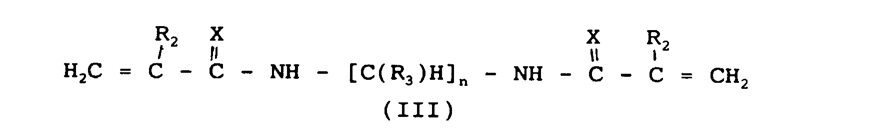 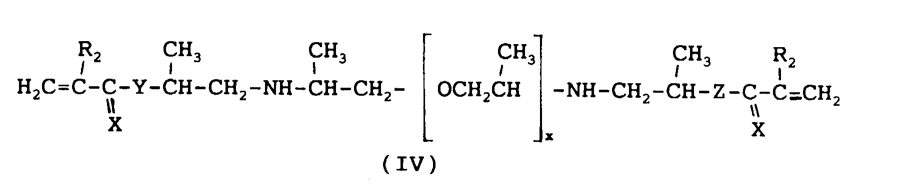 and 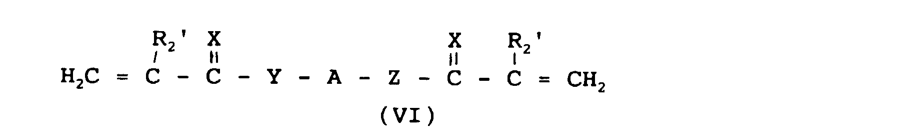 where
- m =: an integer of 2 or more;
- n =: an integer of 2 or more;
- X =: an integer from 1 - 20;
- R₂ =: H, alkyl or halogen;
- R₃ =: H or OH, NH₂, -SH, -SO₂OH, -PO₄⁻³, or an alkyl, cycloalkyl, heterocyclic or aromatic moiety substituted with one or more groups selected from OH, NH₂, -SH, -SO₂OH, -PO₄⁻³;
- X: is selected from O and S;
- Y and Z: are independently selected from -O- and -NH-;
- R₂': is H or CH₃; and
- A: is a hydrophilic or lipophilic unit;
provided that, when the monomer is of the formula (I), then the crosslinking agent is selected from compounds of the formulas (II), (III) and (IV), and that when the monomer is of the formula (V), the crosslinking agent is selected from compounds of the formula (VI).

The preferred and exemplified crosslinking agent of the formula (II) is ethyleneglycol dimethacrylate.

EP 0 280 567 refers to a means for electrophoresis comprising a membrane of an aqueous polyacrylamide gel formed by cross-linking polymerization of an acrylamide compound and a cross-linking agent in the presence of water sandwiched between a support and a covering sheet, wherein said membrane has a thickness gradient in its electrophoresis direction.

Examples of the acrylamide compound employable in EP 0 280 567 include acrylamide and its homologues such as N-methylacrylamide, N,N'-dimethylacrylamide, N-(hydroxymethyl)acrylamide and diacetoneacrylamide, as well as methacrylamide and its homologues. These compounds can be employed independently or in combination. Acrylamide is most preferred among these acrylamide compounds, and this acrylamide can be also preferably employed in combination with one or more of other acrylamide compounds.

As the crosslinking agent employable to obtain the polyacrylamide gel membrane, a known crosslinking agent described, for instance, in "Electrophoresis", 1981, 2, 213-228, can be employed singly or in combination. Examples of the crosslinking agents include bifunctional compounds such as N,N'-methylenebisacrylamide (BIS), N,N'-propylenebisacrylamide (PBA), di(acrylamide dimethyl)-ether (i.e. N,N'-oxydimethyleneacrylamide), 1,2-diacrylamide ethyleneglycol (DEG), 1,3-diacryloylethyleneurea (EUB), ethylene diacrylate (EDA), N,N'-diallyltartardiamide (DATD), and N,N'-bisacrylylcystamine (BAC). Examples of the crosslinking agents also include trifuctional compounds such as 1,3,5-triacryloylhexahydro-s-triazin, triallylcyanurate, and triallylisocyanurate.

The exemplified compositions contain N,N'-methylenebisacrylamide or 1,3,5-triacryloyl-hexahydro-s-triazine as crosslinking agent.

According to EP 0 280 567 the crosslinking polymerization can be initiated by a known method, for instance, in the presence of a peroxide and/or under irridation of ultraviolet rays. The gel-forming solution may be crosslinking polymerized under oxygen-free conditions.

Despite the great amount of effort which has gone into improving conventional polyacrylamide gels, there is still a need for new gels which overcome the problems associated with acrylamide gels such as brittleness, neurotoxicity, cumbersome preparation and short shelf life. There is also a need for new gels which have greater resolution power and recoverability of separated DNA and protein materials to meet the demands of the emerging biotechnology industry.

Electrophoretic media based on polymers with novel structures have now been found whhich provide improved resolution and overcome many of the disadvantages associated with conventional polyacrylamide and agarose gels.

A subject-matter of the present invention is an electrophoretic medium consisting essentially of an aqueous gel formed by polymerization in the presence of aqueous medium and in the absence of oxygen of one or more acrylamide monomers selected from the group comprising acrylamide, N-methylolacrylamide, N-methylacrylamide and mixtures thereof in the presence of one or more different crosslinking or comonomer agents selected from the group consisting of diethyleneglycol diacrylate, diacetone acrylamide, pentaerythritolacrylate, 1,3-butyleneglycol diacrylate, tetraethylene glycol diacrylate, bisacrylamide methylether and tris-(2-hydroxyethyl)isocyanurate triacrylate.

By virtue of the different combinations of monomers and crosslinkers, the resulting gels have polymer structures chemically and architecturally different from those of conventional polyacrylamide gels, and tests indicate that they offer the advantages of greatly improved resolution, greater strength and thermal characteristics over the conventional gels.

In addition to the aforementioned electrophoretic media, this invention relates to the polymerization mixtures from which such media are prepared, i.e., the mixture of components such as monomers, crosslinking agents and catalysts, detergents and buffers which are used to prepare the electrophoretic media. This invention also relates to the novel polymers prepared by the crosslinking polymerization of the above-mentioned monomers and crosslinking agents. Finally, this invention also relates to electrophoretic methods for effecting chromatographic separation of components in a chemical mixture using the above-mentioned electrophoretic media.

As indicated above, the novel gels and electrophoretic media of this invention have polymer structures significantly different from the structures of conventional polyacrylamide and agarose gels.

The acrylamide compounds which may be used to prepare the materials of this invention include acrylamide and related acrylamide compounds such as N,N'-dimethylacrylamide, N-methylolacrylamide, and N-methylacrylamide.

To prepare the polymer gels of this invention, the monomer(s) and crosslinking agent(s) are dissolved or dispersed in aqueous medium (water or a mixture of water with other organic solvents such as dimethylformamide) to prepare an aqueous solution or dispersion in which the crosslinking polymerization reaction is carried out. It is important that the polymerization reaction be carried out in the absence of oxygen. The relative amounts of monomer and crosslinking agent used will vary with the application for which the gel is to be used. Generally, however, the crosslinking agent can be employed in an amount of approximately 1 to 30 wt.%, preferably 2 to 10 wt.%, based on the total weight of the monomer and the cross-linking agent. The preferable gel concentration is such that the amount of monomer and crosslinking agent in the gel is 1.5% to 15% by weight.

A particularly preferred crosslinking agent is the compound bisacrylamide methylether (BAME), (CH₂=CHC(O)NHCH₂)₂O, used in combination with other crosslinkers. BAME can be prepared by methods known in the art such as condensation of N-methylol-acrylamide by acids or heat, or both. See, for example, Rostovskii, E.N. at al., Zh. Prikl. Khim., Moscow, 41(2), 346 (1968); J. Appl. Chem., USSR, 41(2), 327 (1968); Arbuzova, I.A., et al., zh. Obshch. Khim, 31:3023 (1961); J. Gen. Chem. USSR, 31:2819 (1961); Mosevich, I.K., et al., Zh. Obshch. Khim., 38(6):1224 (1968); J. Gen. Chem. USSR, 38(6): 1180 (1968); Nachbur, H. and Maeder, A., Ciba-Geigy A.G., Ger. 2,204,527 (1972); C.A. 78: 17060C.

The crosslinking polymerization reaction by which the novel gels of this invention are prepared is generally carried out in an aqueous medium and can be initiated by known initiators or polymerization catalysts. Suitable free radical-providing catalyst systems are benzoyl peroxide, t-butylhydroperoxide, lauroyl peroxide, cumene hydroperoxide, tetralin peroxide, acetyl peroxide, caproyl peroxide, t-butylperbenzoate, t-butyldiperphthalate, methylethylketone peroxide, hydrogen peroxide-Fe2+-ascorbic acid, riboflavinlight, and various persulfate salts in conjunction with N,N,N',N'-tetramethylethylenediamine (TEMED), diethylmethylaminediamine (DEMED), B-dimethylaminopropionitrile or similar reagents and ammonium persulfate-metabisulfite. Another class of free radical generating catalysts are azocatalysts such as azodiiosobutyronitrile, azodiisobutryamide, azobis (dimethylvaleronitrile) azobis(methylbutyronitrile, dimethyl, diethyl, or dibutylazobismethylvalerate. These and similar reagents contain a N,N double bond attached to aliphatic carbon atoms, at least one of which is tertiary. The amount and type of catalyst and initiator is generally indicated by the nature and concentrations of the monomer and crosslinkers used. The optimum amount of catalyst is also affected by the presence of any accompanying impurities. Generally speaking, however, the catalyst can be employed in the amount of approximately 0.3 to 5 wt.% based on the total amount of the monomer and crosslinking agent. The preferred initiator and catalyst system is TEMED or DEMED and a persulfate salt.

Various buffer systems, denaturing agents or other modifiers (as required by the technique), may be included in the polymerization mixture. Examples of buffer systems suitable for use in the invention are:

| COMMON BUFFER SYSTEMS USED IN ELECTROPHORESIS | |
|---|---|
| Buffer | pH |
| Citrate-phosphate | 3.2 |
| Succinate | 5.2 |
| Phosphate-magnesium sulfate | 6.8 |
| Tris-EDTA-acetate | 7.2 |
| Tris-HCl-magnesium sulfate | 7.4 |
| Tris-EDTA-acetate | 7.8 |
| Tris-magnesium chloride | 8.0 |
| Tris-EDTA-borate | 8.3 |
| Tris-EDTA-borate | 8.6 |
| Tris-EDTA-lactate | 8.6 |
| Tris-veronal | 8.6 |
| Veronal | 9.2 |
| Tris-EDTA-borate | 9.5 |
| Tris-EDTA-phosphate | 8.6 |
| Tris-glycine | 8.8 |
| Tris-glycine-SDS | 8.8 |
| Sodium phosphate | 7.5 |
| Sodium-phosphate SDS | 7.5 |
| Ethanolamine/GABA* | 9.5-10 |
| Tris/acetate/GABA | 9.6-10.2 |
| Ammediol/GABA | 9.6-10.2 |
| Ammediol/HCl | 9.6-10.2 |
| Tris-HCl | 9.3-9.6 |

| | |
|---|---|
| *GABA = gamma, amino butyric acid | |

Tests have indicated that the preferred buffer may vary both with the particular polymer matrix utilized and the desired application. For example, the gels described below as "Gels I and II" are particularly useful for electrophoresis of DNA. Of the two, Gel II, containing a small amount of BAME, is highly preferable. The buffer system Tris-borate-EDTA has utilized with this gel with great success; excellent results have also been obtained using Tris-glycine buffer systems. The gels described below as "Gels III and IV" are particularly useful for electrophoresis of proteins.

The buffer Tris-glycine-SDS has been used with the protein gels with excellent results. Finally, the gels described below as "Gels V and VI" are particularly useful for sequencing of DNA, with Gel VI being the preferred gel among the two. Best results have been achieved with the sequencing gels using the following buffer systems: Tris-borate-EDTA and Tris-glycine.

It is often preferred to incorporate in the gel a urea modifier to maintain the samples in a denatured state. The modifier can be used in an amount of approximately 40 to 60 wt.% based on the volume of the aqueous gel containing the monomer and crosslinking agent.

Other specific examples of denaturing agents which may be incorporated into the electrophoretic media of the invention include N,N-dimethylformamide; n-propyl alcohol; formamide; dimethylformamide; and glycine.

As previously indicated, gels within the scope of this invention may be used for various applications as diverse as separation of proteins, DNA and DNA sequencing. The end uses of the gels will depend heavily on the monomer and cross-linking agent composition as well as on the nature of the additives such as buffers, detergents and catalysts contained in the overall electrophoretic medium. Table I lists monomer/comonomer, crosslinker combinations which have been utilized to prepare gels according to this invention and also indicates the types of electrophoretic applications which have been found to be suitable for each type gel.

**TABLE I**

| Monomer* | Comonomer, Cross-linker* | Applications** |
|---|---|---|
| n-methylolacrylamide | Diethyleneglycol diacrylate | P, DNA |
| " | Diacetone acrylamide (DAA) | DNA |
| " | Pentaerythritolacrylate | P, DNA |
| " | 1, 3 Butyleneglycol diacrylate (BGDA) | P, DNA |
| " | Tetraethylene glycol diacrylate (TEGDA) | P, DNA |
| " | Tris (2-hydroxyethyl)isocyanurate triacrylate (THICTA) | S |
| " | Bisacrylamide methyl ether (BAME) | P, DNA, S |

| | | |
|---|---|---|
| * Generally, the amount of monomer in these aqueous gels ranged from 2.5 to 15%, and the amount of comonomer ranged from 0.025 to 0.5%. | | |
| ** P = useful for protein separations, DNA = useful for separation of DNA; S = useful for DNA sequencing. | | |

A gel medium according to this invention which is suited to one use may not, and probably will not be, suited for another use. Examples of specifically preferred gel compositions according to this invention are presented below. As previously mentioned, Gels I and II have been found to be particularly useful for electrophoresis of DNA strands, Gels III and IV have been found to be particularly useful for the electrophoresis of proteins, and Gels V and VI have been found to be particularly useful for DNA sequencing.

| Gel I | |
|---|---|
| Major Components: | |
| N-methylolacrylamide (NMA) (48% w/v) | 7.8 ml |
| Tetraethyleneglycoldiacrylate (TEGDA) | 0.016 ml |
| 10 x Tris-borate-EDTA | 5 ml |
| TEMED | 0.1 ml |
| Water to | 48.8 ml |
| 10% w/v Ammonium persulfate (APS) | 0.2 ml |

| Gel II | |
|---|---|
| Major Components: | |
| N-methylolacrylamide (NMA) (48% w/v) | 5.26 ml |
| Bisacrylamidemethylether (BAME) | 0.28 g |
| Tetraethyleneglycoldiacrylate (TEGDA) | 0.016 ml |
| 10 x Tris-borate - EDTA | 5 ml |
| TEMED | 0.1 ml |
| Water to | 48.8 ml |
| 10% w/v Ammonium persulfate (APS) | 0.2 ml |

| Gel III | |
|---|---|
| NMA | 5.26 ml |
| TEGDA | 0.025 ml |
| 0.75M Tris-HCl pH 8.8 | 25 ml |
| 10% Sodium Dodecylsulfate (SDS) | 0.5 ml |
| TEMED | 0.1 ml |
| Water to | 48.5 ml |
| 10% APS | 0.5 ml |

| Gel IV | |
|---|---|
| NMA | 5.26 ml |
| BAME | 0.28 g |
| 0.75M Tris-HCl pH 8.8 | 25 ml |
| 10% Sodium Dodecylsulfate (SDS) | 0.5 ml |
| TEMED | 0.1 ml |
| Water to | 48.5 ml |
| 10% APS | 0.5 ml |

| Gel V | |
|---|---|
| DAA | 0.67 g |
| Acrylamide | 2.7 g |
| BGDA | 0.021 ml |
| THICTA | 0.048 g |
| TEMED | 0.05 ml |
| 10 x TBE | 5 ml |
| Water to | 48.6 ml |
| 10% APS | 0.4 ml |

| Gel VI | |
|---|---|
| Acrylamide | 4 g |
| NMA | 1.0 ml |
| BAME | 0.15 g |
| 1 x Tris-Borate EDTA | 6 ml |
| Urea | 42 g |
| 10% APS | 500 µl |
| TEMED | 25 µl |
| water to | 100 ml |

The foregoing examples are, of course, illustrative and not intended to be limiting of the scope of this invention. It would be within the skill in the art to vary the quantities of monomer(s) and cross-linker(s) from those set forth in these examples to prepare gels useful for different electrophoretic applications. For example, it has been found that variations of Gel VI, the preferred sequencing gel, can be made by varying the quantities of monomers and crosslinker as follows: acrylamide, 3.5 - 9 g; NMA, 0.5 - 2.0 ml; BAME, 0.1-0.3. Further, the quantities of the preferred buffers and modifiers in those gels can vary within the following ranges: tris-borate EDTA, 5-18 ml; urea, 36-48 g; 10% APS, 500-800 µl; TEMED, 50-80 µl.

Membranes made from the aqueous gel media of this invention generally have a thickness in the range of approximately 0.1 mm to approximately 3 mm, preferably in the range of approximately 0.2 to 1.5 mm. The gel membranes of this invention can also, however, be made very thin, e.g., to a thickness of less than 0.1 mm, and yet exhibit excellent resiliency and resolution. The aqueous gel media of this invention can be used for electrophoretic applications by methods well known in the art. By way of example, the following is a description of how the "DNA" gel described above as Gel II might be used:

Gel II is useful for separating double-stranded or single-stranded fragments of DNA linearly in the range from 10 to 600 bases. The gels may be polymerized between glass plates of standard vertical electrophoresis apparatus. A 10% gel is useful for separating fragments in the size range 5 to 150 base pairs; a 5% gel is useful for separating from 100 to 600 base pairs. Denaturing for synthetic oligonucleotide purifications can be accomplished using normal denaturing conditions (such as urea).

In more detail, Gel II may be prepared as follows. This procedure describes the preparation of 50 mls of the gel, a sufficient amount for a 14 x 14 cm gel with a 1.5 mm spacer.

### 10% Gel (5 to 150 base pairs)

1. Wash and assemble glass plates according to manufacturer's instructions.
2. Place 25 mls. of gel solution into a clean beaker.
3. Add 5 mls of 10 x TBE buffer concentrate.
4. Add 19.7 mls of deionized water.
5. Add 100 µl of TEMED.
6. Add 200 µl of fresh 10% ammonium persulfate.
7. Swirl the solution gently and immediately pour the gel solution to the top of the glass plates by utilizing a syringe without a needle or a 25 ml pipette.
8. Insert the sample comb and llow 15-30 minutes for complete polymerization.

### 5% Gel (100 to 600 base pairs)

1. Prepare plates as described above in step 1 of 10% gel.
2. Place 12.5 mls of gel solution into a clean beaker.
3. Add 5 mls of 10 x TBE buffer concentrate.
4. Add 32.2 mls of deionized water.
5. Add 100 µl of TEMED.
6. Add 200 µl of fresh 10% ammonium persulfate.
7. Follow steps 7 and 8 from 10% gel.

### Electrophoresis

1. Prepare sufficient 1 x TBE buffer for upper and lower buffer chambers.
2. Assemble electrophoresis apparatus according to manufacturers' directions.
3. Carefully remove the sample well comb and wash the wells with 1 x TBE buffer.
4. Add approximately 1 µg of sample in 4-10 µl to each well. Load more DNA if interested in very small bands.
5. The gels are run at 200V constant voltage for approximately 1-1/2 hours or until Orange G tracking dye has reached the-bottom of the plate.
6. Remove the glass plates and stain the gels with ethidium bromide (1-5 µg/ml).

### Sample Preparation

Gel II has been found to be superior to standard polyacrylamide gels particularly in resolution of small DNA fragments. Thus, a single gel can accomplish that which if possible would require multiple runs on different concentration polyacrylamide gels. Tests indicate that other gels within the scope of this invention are also highly suited for electrophoretic applications and are superior to standard polyacrylamide and agarose gels for the same reasons. Gel IV also provides substantial improvement in resolution over standard polyacrylamide gels for proteins particularly in the protein size range 20-205 kd. Gel V shows markedly improved ease of handling, and demonstrates an increase of 10% in the number of bases which can be read over a 4% polyacrylamide gel. In comparison to a 6% polyacrylamide gel (more similar in handling characteristics) a 75% increase in bases read is observed.

The materials described herein for use as gels can also be prepared as porous, non-porous, or macroreticular beads of any dimension for use in electrophoretic applications. In preparing beads several polymerization conditions well known in the art can be used. A preferred method is suspension polymerization in a liquid which is not a solvent for the materials used. This method produces the polymer in the form of spheroid beads the size of which can be regulated and controlled by the composition of the suspending medium and the rate of agitation during polymerization. The determination of the most effective conditions vary from case to case, depending on the materials chosen, their amounts and relative proportions. Polymerization may also be carried out in the presence of a precipitant, i.e., a liquid which acts as a solvent for the mixture and is chemically inert under the polymerization conditions. The solvent must be present in such amounts as to exert little solvating action. On polymerization phase separation of the product takes place. The exact solvents used are determined and optimized empirically for each mixture. A typically used inverse suspension polymerization involves a small amount of water in a hexane solution stirred very fast with initiators present. The polymerizing materials will stay in the water droplets depending on their hydrophilic properties.

Beads prepared from the above described materials may also be useful for the separation of DNA, RNA, proteins and peptides in a chromatography format. Separation can be adjusted to occur via interaction or be based on size. Interactive chromatography can result from ion-exchange, hydrophobic, or other modes directly with the bead materials or with modifiers or substituted chemical groups added pre- or post-polymerization.

The materials described can also be used for the preparation of gels or beads, alone or in conjunction with other materials or attached to any surface, for the purpose of providing nutrients and support for bacterial or cellular growth for any purpose. Examples are polymerizing in and/or placing gels or beads alone or in conjunction with other materials in petri dishes or by coating (covalently or non-covalently) glass, metal, plastic, teflon, paper of any composition, polyvinylchloride, silica or other surfaces. Applications may include bacterial smears for diagnostic purposes or provisions of attachment sites for cell growth. A further example of such a material is polyvinylchloride papers impregnated with silica or glass. Coating of these surfaces with a function capable of participating in the polymerization process would allow direct polymerization and covalent attachment of the material to the support.

In addition to these applications it is also feasible to include into the polymerization mixture proteins, peptides, pharmaceuticals, silica, or electron conductive materials. The above materials could be used for a variety of applications including drug delivery, artificial organs or parts thereof and plastic type conductors of electricity.

The following are exemplary procedures for preparing the preferred cross-linking agent, bisacrylamide methyl ether.

### Preparation of BAME

A. Add 1 ml. concentrated sulfuric acid to 1 liter of N-methylolacrylamide (NMA). Stir at room temperature for 8 - 16 hours.
B. Remove an aliquot, dilute it and check BAME concentration by HPLC analysis.
C. Once the quantity of BAME in the NMA is 18-23% by the elution profile, adjust the pH of the NMA/BAME mixture to 6.5 with 1-2 N NaOH to stop the reaction.
D. Dilute the mixture with unconverted NMA to a BAME concentration of 10.89%. Confirm this concentration by HPLC analysis.
E. The resulting NMA with 10.89% BAME may be stored in this liquid form and/or the mixture used directly to make NMA/BAME gels such as Gel II above.

### BAME Crystalization

A. Add 1.5 ml concentrated sulfuric acid to 1.0 liter NMA. Stir the resulting mixture for two days at room temperature or until heavy white crystals appear.
B. Filter crystals from the mixture on a Buchner funnel, and continue stirring the filtrate.
C. Suspend crystals in 300-1000 ml deionized water and neutralize the suspension to a pH of about 7-8 by dropwise addition of 10 N NaOH.
D. Heat the neutralized suspension to 60-70°C, with stirring, until the crystals are dissolved. Once dissolved, filter the hot solution on a Buchner funnel.
E. Recover all crystals from filter flasks with hot filtrate. Then heat the filtrate to 90-100°C while stirring. Concentrate the material to about 60% of its original volume and remove from heat.
F. Cool the concentrate to room temperature for recrystallization.
G. Filter crystals on a Buchner funnel and wash twice with cold deionized water.
H. Such the crystal cake dry on a Buchner funnel. Place the crystals in a dessicator and dry under vacuum for at least 24 hours.
I. Once the crystals are dry, confirm melting point of BAME crystals at 138-139°C.

## Claims

1. An electrophoretic medium consisting essentially of an aqueous gel formed by polymerization in the presence of aqueous medium and in the absence of oxygen of one or more acrylamide monomers selected from the group comprising acrylamide, N-methylolacrylamide, N-methylacrylamide and mixtures thereof in the presence of one or more different crosslinking or comonomer agents selected from the group consisting of diethyleneglycol diacrylate, diacetone acrylamide, pentaerythritolacrylate, 1,3-butyleneglycol diacrylate, tetraethylene glycol diacrylate, bisacrylamide methylether and tris-(2-hydroxyethyl) isocyanurate triacrylate.

2. An eletrophoretic medium according to claim 1 characterised in that the acrylamide monomer is selected from acrylamide, N-methylolacrylamide and mixtures thereof.

3. The electrophorectic medium according to claim 2 characterised in that the acrylamide monomer is N-methylolacrylamide.

4. An electrophoretic medium according to any of claims 1 to 3 characterised in that said crosslinking agent or comonomer is diethyleneglycol diacrylate.

5. An electrophoretic medium according to any of claims 1 to 3 characterised in that crosslinking agent or comonomer is diacetone acrylamide.

6. An electrophoretic medium according to any of claims 1 to 3 characterised in that said crosslinking agent or comonomer is pentaerythritolacrylate.

7. An electrophoretic medium according to any of claims 1 to 3 characterised in that said crosslinking agent or comonomer is 1.3-butyleneglycol diacrylate.

8. An electrophoretic medium according to any of claims 1 to 3 characterised in that said crosslinking agent or comonomer is tetraethylene glycol diacrylate.

9. An electrophoretic medium according to any of claims 1 to 3 characterised in that said crosslinking agent or comonomer is tris-(2-hydroxy-ethyl) isocyanurate triacrylate.

10. An electrophoretic medium according to any of claims 1 to 3 characterised in that crosslinking agent or comonomer is bisacrylamide methylether.

11. An electrophoretic medium according to any of claims 1 to 3 characterised in that said crosslinking or comonomer agents comprise a mixture of bisacrylamide methylether and tetraethylene glycol diacrylate.

12. A polymerization mixture for preparing the electrophoretic medium of claim 1 comprising one or more acrylamide monomers selected from the group comprising acrylamide, N-methylolacrylamide, N-methylacrylamide and mixtures thereof and one or more crosslinking agents selected from the group consisting of diethyleneglycol diacrylate, diacetone acrylamide, pentaerythritolacrylate, 1,3-butyleneglycol diacrylate, tetraethylene glycol diacrylate, bisacrylamide methylether and tris-(2-hydroxyethyl) isocyanurate triacrylate; a polymerization catalyst; and aqueous medium.

13. A polymerization mixture according to claim 12 characterised in that it comprises the acrylamide monomer N-methylolacrylamide and the crosslinking agent is a mixture of bisacrylamide methylether and tetraethylene glycol diacrylate.

14. A polymerization mixture according to claim 12 characterised in that the acrylamide monomer is a mixture of acrylamide and N-methylolacrylamide and the crosslinking agent is bisacrylamide methylether.

15. A polymer comprising the product of the crosslinking polymerization of one or more acrylamide monomers selected from the group comprising acrylamide, N-methylolacrylamide, N-methylacrylamide and mixtures thereof and one or more crosslinking agents selected from the group consisting of diethyleneglycol diacrylate, diacetone acrylamide, pentaerythritolacrylate, 1,3-butyleneglycol diacrylate, tetraethylene glycol diacrylate, bisacrylamide methylether and tris-(2-hydroxyethyl) isocyanurate triacrylate.

16. A polymer according to claim 15 characterised in that it comprises the product of the crosslinking polymerization of the acrylamide monomer, N-methylolacrylamide and the crosslinking agents, bisacrylamide methylether and tetraethylene glycol diacrylate.

17. A polymer according to claim 15 characterised in that it comprises the product of the crosslinking polymerization of the acrylamide monomers acrylamide and N-methylolacrylamide and the crosslinking agent bisacrylamide methylether.

18. A method of effecting chromatographic separation of components in a chemical mixture comprising applying a sample of said chemical mixture to one portion of an electrophoretic medium, applying an electric potential to said medium or subjecting said medium to the force of gravity, and subsequently determining the location of said components in said medium characterised in that the electrophoretic medium is a medium according to any claims 1 to 11.

19. A method according to claim 18 characterised in that said chemical mixture is a mixture of DNA and/or RNA.

20. A method according to claim 18 characterised in that said chemical mixture is a mixture of proteins.

## Patentansprüche

1. Elektrophoretisches Medium, das im wesentlichen aus einem wäßrigen Gel besteht, das durch Polymerisation in der Gegenwart von wäßrigem Medium und in der Abwesenheit von Sauerstoff aus einem Acrylamidmonomer oder mehreren Acrylamidmonomeren gebildet wird, die aus der Gruppe ausgewählt werden, die folgendes umfaßt: Acrylamid, N-Methylolacrylamid, N-Methylacrylamid und Gemische davon in der Gegenwart von einem Vernetzungs- oder Comonomermittel oder mehreren verschiedenen Vernetzungs- oder Comonomermitteln, die aus der Gruppe ausgewählt werden, die aus Diethylenglycoldiacrylat, Diacetonacrylamid, Pentaerythritolacrylat, 1,3-Butylenglycoldiacrylat, Tetraethylenglycoldiacrylat, Bisacrylamidmethylether und Tris-(2-hydroxyethyl)isocyanurat-triacrylat besteht.

2. Elektrophoretisches Medium nach Anspruch 1, dadurch gekennzeichnet, daß das Acrylamidmonomer aus Acrylamid, N-Methylolacrylamid und Gemischen davon ausgewählt wird.

3. Elektrophoretisches Medium nach Anspruch 2, dadurch gekennzeichnet, daß das Acrylamidmonomer N-Methylolacrylamid ist.

4. Elektrophoretisches Medium nach einem der Ansprüche 1 bis 3, dadurch gekennzeichnet, daß genanntes Vernetzungsmittel oder Comonomer Diethylenglycoldiacrylat ist.

5. Elektrophoretisches Medium nach einem der Ansprüche 1 bis 3, dadurch gekennzeichnet, daß das Vernetzungsmittel oder Comonomer Diacetonacrylamid ist.

6. Elektrophoretisches Medium nach einem der Ansprüche 1 bis 3, dadurch gekennzeichnet, daß genanntes Vernetzungsmittel oder Comonomer Pentaerythritolacrylat ist.

7. Elektrophoretisches Medium nach einem der Ansprüche 1 bis 3, dadurch gekennzeichnet, daß genanntes Vernetzungsmittel oder Comonomer 1,3-Butylenglycoldiacrylat ist.

8. Elektrophoretisches Mittel nach einem der Ansprüche 1 bis 3, dadurch gekennzeichnet, daß genanntes Vernetzungsmittel oder Comonomer Tetraethylenglycoldiacrylat ist.

9. Elektrophoretisches Medium nach einem der Ansprüche 1 bis 3, dadurch gekennzeichnet, daß genanntes Vernetzungsmittel oder Comonomer Tris-(2-hydroxyethyl)isocyanurat-triacrylat ist.

10. Elektrophoretisches Medium nach einem der Ansprüche 1 bis 3, dadurch gekennzeichnet, daß das Vernetzungsmittel oder Comonomer Bisacrylamidmethylether ist.

11. Elektrophoretisches Mittel nach einem der Ansprüche 1 bis 3, dadurch gekennzeichnet, daß genannte Vernetzungs- oder Comonomermittel ein Gemisch aus Bisacrylamidmethylether und Tetraethylenglycoldiacrylat umfassen.

12. Polymerisationsgemisch zum Herstellen des elektrophoretischen Mediums von Anspruch 1, das folgendes umfaßt: Ein Acrylamidmonomer oder mehrere Acrylamidmonomere, die aus der Gruppe ausgewählt werden, die Acrylamid, N-Methylolacrylamid, N-Methylacrylamid und Gemische davon und ein oder mehrere Vernetzungsmittel umfaßt, die aus der Gruppe ausgewählt werden, die aus Diethylenglycoldiacrylat, Diacetonacrylamid, Pentaerythritolacrylat, 1,3-Butylenglycoldiacrylat, Tetraethylenglycoldiacrylat, Bisacrylamidmethylether und Tris-(2-hydroxyethyl)isocyanurattriacrylat besteht; einen Polymerisationskatalysator und wäßriges Medium.

13. Polymerisationsgemisch nach Anspruch 12, dadurch gekennzeichnet, daß es das Acrylamidmonomer N-Methylolacrylamid umfaßt und das Vernetzungsmittel ein Gemisch aus Bisacrylamidmethylether und Tetraethylenglycoldiacrylat ist.

14. Polymerisationsgemisch nach Anspruch 12, dadurch gekennzeichnet, daß das Acrylamidmonomer ein Gemisch aus Acrylamid und N-Methylolacrylamid ist und das Vernetzungsmittel Bisacrylamidmethylether ist.

15. Polymer, welches das Produkt der Vernetzungspolymerisation von einem Acrylamidmonomer oder mehreren Acrylamidmonomeren umfaßt, die aus der Gruppe ausgewählt werden, die folgendes umfaßt: Acrylamid, N-Methylolacrylamid, N-Methylacrylamid und Gemische davon und ein oder mehrere Vernetzungsmittel, die aus der Gruppe ausgewählt werden, die aus Diethylenglycoldiacrylat, Diacetonacrylamid, Pentaerythritolacrylat, 1,3-Butylenglycoldiacrylat, Tetraethylenglycoldiacrylat, Bisacrylamidmethylether und Tris-(2-hydroxyethyl)isocyanurat-triacrylat besteht.

16. Polymer nach Anspruch 15, dadurch gekennzeichnet, daß es das Produkt von der Vernetzungspolymerisation des Acrylamidmonomers N-Methylolacrylamid und die Vernetzungsmittel Bisacrylamidmethylether und Tetraethylenglycoldiacrylat umfaßt.

17. Polymer nach Anspruch 15, dadurch gekennzeichnet, daß es das Produkt von der Vernetzungspolymerisation der Acrylamidmonomere Acrylamid und N-Methylolacrylamid und das Vernetzungsmittel Bisacrylamidmethylether umfaßt.

18. Verfahren zur Bewirkung der chromatographischen Trennung von Komponenten in einem chemischen Gemisch, das folgendes umfaßt: Auftragen einer Probe von genanntem chemischem Gemisch auf einen Teil eines elektrophoretischen Mediums, Anlegen einer elektrischen Spannung an genanntes Medium oder Aussetzen genannten Mediums einer Schwerkraft und nachfolgende Bestimmung der Stelle von genannten Komponenten in genanntem Medium, dadurch gekennzeichnet, daß das elektrophoretische Medium ein Medium nach einem der Ansprüche 1 bis 11 ist.

19. Verfahren nach Anspruch 18, dadurch gekennzeichnet, daß genanntes chemisches Gemisch ein Gemisch aus DNA und/oder RNA ist.

20. Verfahren nach Anspruch 18, dadurch gekennzeichnet, daß das chemische Gemisch ein Gemisch aus Proteinen ist.

## Revendications

1. Milieu électrophorétique consistant essentiellement en un gel aqueux formé par polymérisation, en présence d'un milieu aqueux et en l'absence d'oxygène, d'un ou de plusieurs monomères d'acrylamide sélectionnés à partir du groupe comprenant l'acrylamide, le N-méthylolacrylamide, le N-méthylacrylamide et des mélanges de ceux-ci en présence d'un ou de plusieurs différents agents de réticulation ou comonomères sélectionnés à partir du groupe consistant en diacrylate de diéthylèneglycol, diacétone acrylamide, pentaérythritolacrylate, diacrylate de 1,3-butylèneglycol, diacrylate de tétraéthylèneglycol, méthyléther de bisacrylamide et triacrylate de tris-(2-hydroxyéthyl)isocyanurate.

2. Milieu électrophorétique selon la revendication 1, caractérisé en ce que le monomère d'acrylamide est sélectionné à partir de l'acrylamide, du N-méthylolacrylamide et de mélanges de ceux-ci.

3. Milieu électrophorétique selon la revendication 2, caractérisé en ce que le monomère d'acrylamide est du N-méthylolacrylamide.

4. Milieu électrophorétique selon l'une quelconque des revendications 1 à 3, caractérisé en ce que ledit agent de réticulation ou comonomère est du diacrylate de diéthylèneglycol.

5. Milieu électrophorétique selon l'une quelconque des revendications 1 à 3, caractérisé en ce que l'agent de réticulation ou comonomère est du diacétone acrylamide.

6. Milieu électrophorétique selon l'une quelconque des revendications 1 à 3, caractérisé en ce que ledit agent de réticulation ou comonomère est du pentaérythritolacrylate.

7. Milieu électrophorétique selon l'une quelconque des revendications 1 à 3, caractérisé en ce que ledit agent de réticulation ou comonomère est du diacrylate de 1,3-butylèneglycol.

8. Milieu électrophorétique selon l'une quelconque des revendications 1 à 3, caractérisé en ce que ledit agent de réticulation ou comonomère est du diacrylate de tétraéthylèneglycol.

9. Milieu électrophorétique selon l'une quelconque des revendications 1 à 3, caractérisé en ce que l'agent de réticulation ou comonomère est du triacrylate de tris-(2-hydroxyéthyl)isocyanurate.

10. Milieu électrophorétique selon l'une quelconque des revendications 1 à 3, caractérisé en ce que l'agent de réticulation ou comonomère est du méthyléther de bisacrylamide.

11. Milieu électrophorétique selon l'une quelconque des revendications 1 à 3, caractérisé en ce que les agents de réticulation ou comonomères comprennent un mélange de méthyléther de bisacrylamide et de diacrylate de tétraéthylèneglycol.

12. Mélange de polymérisation pour préparer le milieu électrophorétique de la revendication 1 comprenant un ou plusieurs monomères d'acrylamide sélectionnés à partir du groupe comprenant l'acrylamide, le N-méthylolacrylamide, le N-méthylacrylamide et des mélanges de ceux-ci et un ou plusieurs agents de réticulation sélectionnés à partir du groupe consistant en diacrylate de diéthylèneglycol, diacétone acrylamide, pentaérythritolacrylate, diacrylate de 1,3-butylèneglycol, diacrylate de tétraéthylèneglycol, méthyléther de bisacrylamide et triacrylate de tris-(2-hydroxyéthyl)isocyanurate; un catalyseur de polymérisation; et un milieu aqueux.

13. Mélange de polymérisation selon la revendication 12, caractérisé en ce qu'il comprend le monomère d'acrylamide N-méthylolacrylamide et l'agent de réticulation est un mélange de méthyléther de bisacrylamide et de diacrylate de tétraéthylèneglycol.

14. Mélange de polymérisation selon la revendication 12, caractérisé en ce que le monomère d'acrylamide est un mélange d'acrylamide et de N-méthylolacrylamide et l'agent de réticulation est du méthyléther de bisacrylamide.

15. Polymère comprenant le produit de la polymérisation par réticulation d'un ou de plusieurs monomères d'acrylamide sélectionnés à partir du groupe comprenant l'acrylamide, le N-méthylolacrylamide, le N-méthylacrylamide et des mélanges de ceux-ci et un ou plusieurs agents de réticulation sélectionnés à partir du groupe consistant en diacrylate de diéthylèneglycol, diacétone acrylamide, pentaérythritolacrylate, diacrylate de 1,3-butylèneglycol, diacrylate de tétraéthylèneglycol, méthyléther de bisacrylamide et triacrylate de tris-(2-hydroxyéthyl)isocyanurate.

16. Polymère selon la revendication 15, caractérisé en ce qu'il comprend le produit de la polymérisation par réticulation du monomère d'acrylamide, le N-méthylolacrylamide, et des agents de réticulation, le méthyléther de bisacrylamide et le diacrylate de tétraéthylèneglycol.

17. Polymère selon la revendication 15, caractérisé en ce qu'il comprend le produit de la polymérisation par réticulation des monomères d'acrylamide, l'acrylamide et le N-méthylolacrylamide et de l'agent de réticulation, le méthyléther de bisacrylamide.

18. Procédé pour effectuer la séparation chromatographique des composants dans un mélange chimique comprenant appliquer un échantillon dudit mélange chimique à une portion d'un milieu électrophorétique, appliquer un potentiel électrique audit milieu ou soumettre ledit milieu à la force de gravité, et déterminer ensuite l'emplacement desdits composants dans ledit milieu, caractérisé en ce que le milieu électrophorétique est un milieu selon l'une quelconque des revendications 1 à 11.

19. Procédé selon la revendication 18, caractérisé en ce que ledit mélange chimique est un mélange d'ADN et/ou d'ARN.

20. Procédé selon la revendication 18, caractérisé en ce que ledit mélange chimique est un mélange de protéines.
